# FASCICULE DE BREVET EUROPEEN

(11) **EP 3 029 702 B1**
(45) Date de publication et mention de la délivrance du brevet: **01.01.2020**
(21) Numéro de dépôt: 15194869.2
(22) Date de dépôt: 17.11.2015
(51) Int. Cl.: H01H 71/04

(54) **SYSTEME DE COMMANDE D'UNE CHARGE ELECTRIQUE**
SYSTEM ZUR STEUERUNG EINER ELEKTRISCHEN LADUNG
CONTROL SYSTEM OF AN ELECTRICAL LOAD

(30) Priorité: 02.12.2014 FR 1461785
(43) Date de publication de la demande: 08.06.2016
(73) Titulaire: Schneider Electric Industries SAS, 92500 Rueil-Malmaison (FR)
(72) Inventeur: CORTESE, Gilles, 38050 GRENOBLE (FR); BLONDEL, Charles, 38050 GRENOBLE (FR)
(74) Mandataire: Tripodi, Paul

(56) Documents cités:
- EP-A1- 1 612 825
- US-A- 3 742 402
- US-A- 5 051 731
- US-A- 5 353 014
- US-B1- 6 442 007

## Description

### Domaine technique de l'invention

La présente invention se rapporte à un système de commande d'une charge électrique, incluant un interrupteur et un indicateur de signalisation.

### Etat de la technique

Un système de commande d'une charge électrique telle qu'une ampoule électrique comporte classiquement un interrupteur de commande chargé de commander le passage d'un courant électrique dans l'ampoule électrique. De manière connue, le système peut comporter un indicateur de signalisation, tel qu'un indicateur lumineux. Celui-ci permet notamment de visualiser l'interrupteur dans l'obscurité. Il est allumé lorsque l'interrupteur est ouvert de manière à être visible dans l'obscurité et il est éteint lorsque l'interrupteur est fermé, l'ampoule commandée étant alors allumée. En règle générale, cet indicateur lumineux est connecté en parallèle de l'interrupteur. Lorsque l'interrupteur est à l'état ouvert, le courant électrique traverse donc l'indicateur lumineux et permet de l'activer. Lorsque l'interrupteur est à l'état fermé, l'indicateur lumineux est court-circuité par l'interrupteur et est donc inactif. L'indicateur lumineux étant en série avec l'ampoule électrique, le courant qui le traverse lorsque l'interrupteur est à l'état ouvert doit rester limité pour ne pas entraîner un éclairement, même faible, de l'ampoule électrique.

Tant que les ampoules étaient de type à incandescence ou halogène, ce courant était insuffisant pour faire éclairer l'ampoule électrique. Aujourd'hui, l'apparition des ampoules dites « à basse consommation » de type à LED ou fluorescente génère de nouvelles difficultés. En effet, ces ampoules n'ont besoin que d'un très faible courant pour fonctionner. Il s'avère donc que le courant de commande de l'indicateur lumineux, lorsque l'interrupteur est à l'état ouvert, devient désormais suffisant pour entraîner un faible éclairement d'une ampoule de ce type.

Une solution simple déjà mise en oeuvre est de réduire le courant de commande de l'indicateur lumineux. Cependant, l'indicateur lumineux, qui ne dispose alors que d'un courant de commande infime, devient très peu visible. Le document US 5 353 014 décrit un tel dispositif de commande d'indicateur connu de l'art antérieur.

Une autre solution déjà employée consiste à connecter un condensateur en parallèle de l'ampoule électrique. Cependant, cette solution s'avère peu pratique à mettre en œuvre.

Le but de l'invention est de proposer un système de commande d'une charge électrique, telle que par exemple une ampoule électrique, incluant un interrupteur et un indicateur de signalisation. Ce système est compatible avec toutes les ampoules, même celles qui sont dites « à basse consommation », sans entraîner un éclairement, même faible, de l'ampoule lorsque l'interrupteur est à l'état ouvert.

### Exposé de l'invention

Ce but est atteint par un système de commande d'une charge électrique destiné à recevoir une tension fournie par un réseau électrique et comprenant :
- un interrupteur de commande, agencé pour prendre un état ouvert ou un état fermé,
- un indicateur de signalisation connecté en parallèle de l'interrupteur et agencé pour prendre deux états distincts liés chacun à l'état ouvert ou à l'état fermé de l'interrupteur,
- un dispositif de contrôle connectée à l'indicateur de signalisation et agencé pour limiter une tension aux bornes de la charge électrique au-dessous d'une valeur seuil lorsque l'interrupteur est à l'état ouvert.

Selon un premier mode de réalisation, le dispositif de contrôle est connecté en série avec l'indicateur de signalisation.

Selon ce premier mode de réalisation, le dispositif de contrôle comporte un dispositif d'écrêtage agencé pour absorber la différence entre la tension fournie par le réseau électrique et la valeur seuil de tension.

Selon ce premier mode de réalisation, le dispositif d'écrêtage comporte par exemple deux diodes Transil connectées en série. Dans une variante de réalisation, le dispositif d'écrêtage comporte un transistor agencé pour compenser les variations de la tension fournie par le réseau.

Selon un autre mode de réalisation, le dispositif de contrôle est connecté en parallèle de l'interrupteur et l'indicateur de signalisation est connecté audit dispositif de contrôle.

Selon cet autre mode de réalisation, le dispositif de contrôle comporte un gradateur agencé pour permettre une alimentation de l'indicateur de signalisation avant ou après le passage par zéro de la tension fournie par le réseau.

Avantageusement, l'indicateur de signalisation sera de type lumineux. Mais il pourra être de type sonore ou comporter un détecteur d'état de l'interrupteur agencé pour détecter l'état ouvert ou l'état fermé de l'interrupteur.

### Brève description des figures

D'autres caractéristiques et avantages vont apparaître dans la description détaillée qui suit faite en regard des dessins annexés dans lesquels :
- la figure 1 représente un système de commande d'une ampoule électrique conforme à l'état de la technique,
- les figures 2A et 2B représentent le système de commande d'une ampoule électrique conforme à l'invention, selon deux modes de réalisation distincts,
- les figures 3A et 3B représentent deux modes de réalisation du système de commande représenté sur la figure 2A,
- la figure 3C représente des courbes illustrant le fonctionnement du premier mode de réalisation du système de commande représenté sur les figures 2A, 3A et 3B,
- la figure 4A représente un système de commande d'une ampoule électrique conforme à l'invention, selon un deuxième mode de réalisation représenté sur la figure 2B,
- la figure 4B représente des courbes illustrant le fonctionnement du second mode de réalisation du système de commande représenté sur la figure 4A.

### Description détaillée d'au moins un mode de réalisation

L'invention concerne un système de commande d'une charge électrique. L'invention s'applique plus particulièrement pour une charge électrique de type ampoule L1 d'éclairage, notamment de type à LED ou fluorescente. Dans la suite de la description, nous nous intéresserons donc à une charge électrique de type ampoule L1 d'éclairage.

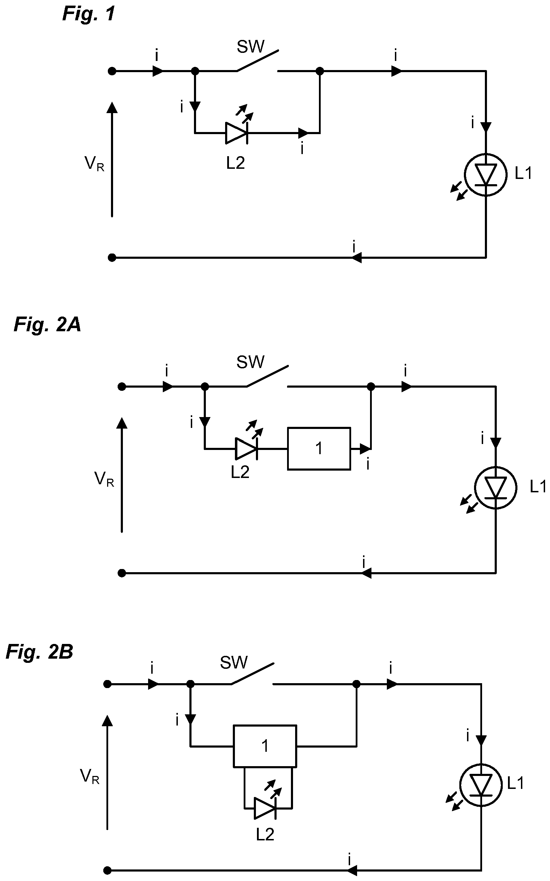

Comme représenté sur la figure 1, un système de commande comporte un interrupteur SW de commande connecté en série avec l'ampoule L1 sur un circuit de commande. Il contrôle l'allumage ou l'extinction de l'ampoule L1 électrique par commande entre deux états, un état ouvert et un état fermé.

Le système comporte également un indicateur L2 de signalisation. L'indicateur L2 de signalisation est connecté en parallèle de l'interrupteur SW de commande. Ainsi, lorsque l'interrupteur SW est à l'état ouvert, un courant i traverse l'indicateur de signalisation, de manière à l'activer puis il circule à travers la charge, par exemple l'ampoule L1. Lorsque l'interrupteur SW est à l'état fermé, l'indicateur de signalisation est court-circuité par l'interrupteur SW et un courant traverse l'interrupteur pour alimenter l'ampoule L1.

L'indicateur de signalisation est préférentiellement un indicateur L2 lumineux. L'indicateur peut cependant être par exemple sonore ou comporter un détecteur d'état de l'interrupteur SW agencé pour détecter l'état ouvert ou fermé de l'interrupteur. Ce détecteur comporte par exemple un module de communication se chargeant lorsque l'interrupteur est à l'état ouvert. Le module de communication communique avec un récepteur doté d'une unité de traitement destinée à traiter l'information d'état de l'interrupteur SW. Cette information d'état pourra être employée pour différents types d'application, par exemple la détection d'activité pour des personnes âgées, la détection de manoeuvre inhabituelle ou la détection de charge non coupée.

Dans la suite de la description, nous nous intéresserons à un indicateur L2 de signalisation de type lumineux mais il faut comprendre que ce choix n'est pas limitatif.

Il a été constaté que lorsque l'ampoule L1 est de type à LED ou fluorescente, le courant qui alimente l'indicateur L2 lumineux lorsque l'interrupteur SW est ouvert est susceptible de provoquer un faible éclairement de l'ampoule L1.

Pour pallier cet inconvénient, le système de commande de l'invention comporte un dispositif 1 de contrôle destiné à limiter la tension aux bornes de l'ampoule L1 au-dessous d'une valeur seuil. En effet, à l'heure actuelle, on a constaté qu'aucune ampoule L1 n'éclaire, ni ne clignote lorsqu'une tension inférieure à une valeur seuil déterminée est appliquée à ses bornes. Cette valeur seuil est par exemple égale à 20Vdc ou 20Vac.

Si la tension appliquée aux bornes de l'ampoule L1 respecte ce seuil, l'indicateur L2 lumineux peut consommer un courant de plusieurs milliampères, suffisant pour produire une intensité lumineuse visible.

Selon l'invention, le dispositif 1 de contrôle est donc agencé pour ne faire consommer par l'indicateur L2 lumineux qu'une certaine forme de courant correspondant à une tension suffisamment faible aux bornes de l'ampoule L1. L'indicateur L2 lumineux n'est donc alimenté que sur les phases où la tension fournie par le réseau sera inférieure à la valeur seuil déterminée. Le clignotement de l'indicateur L2 lumineux restera cependant invisible à l'œil nu.

Pour appliquer cette tension aux bornes de l'ampoule L1 lorsque l'interrupteur SW est ouvert, deux périodes distinctes peuvent être exploitées sur la tension V_{R} sinusoïdale appliquée par le réseau électrique :
- autour de la crête de la tension V_{R} sinusoïdale fournie par le réseau,
- autour du passage à zéro de la tension V_{R} sinusoïdale fournie par le réseau.

Ainsi, grâce au dispositif de contrôle de l'invention, l'indicateur L2 n'est alimenté que lorsque la tension V_{R} fournie par le réseau est autour de ses crêtes ou autour de ses passages par zéro.

En référence à la figure 2A, le dispositif 1 de contrôle peut être connecté en série avec l'indicateur L2 lumineux. En référence à la figure 2B, le dispositif 1 de contrôle est connecté en parallèle de l'interrupteur et est agencé pour alimenter l'indicateur L2 lumineux.

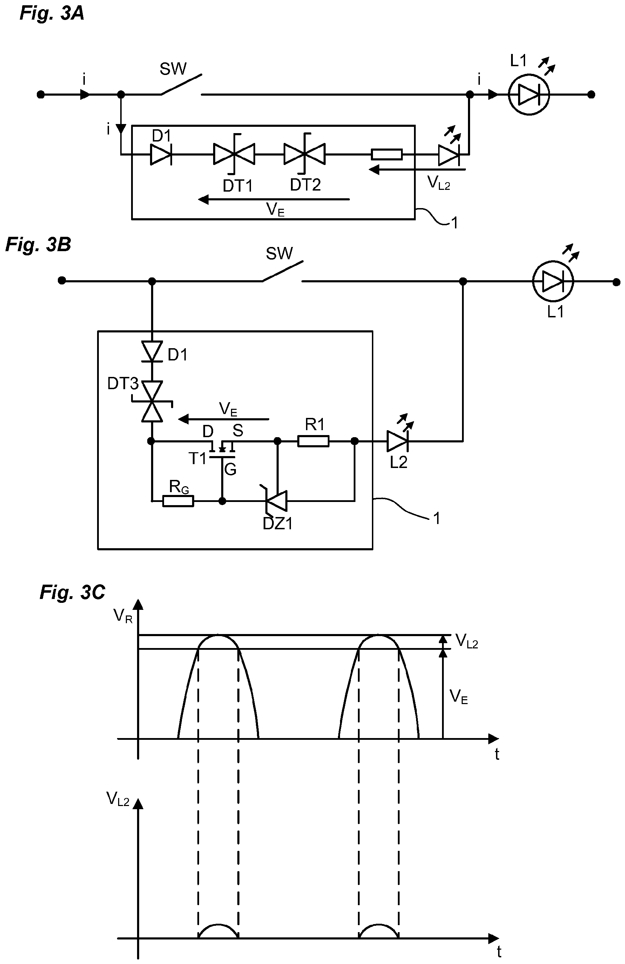

En référence aux figures 2A, 3A et 3B, pour un écrêtage de la tension fournie par le réseau, le dispositif 1 de contrôle comporte un dispositif écrêteur permettant d'absorber la différence entre la tension V_{R} fournie par le réseau et la tension à appliquer à l'ampoule L1, inférieure à la tension seuil définie ci-dessus. Ce dispositif écrêteur est connecté en série avec l'indicateur L2 lumineux. Avantageusement, le dispositif 1 de contrôle peut comporter une diode D1 connectée en série avec le dispositif écrêteur afin de ne conserver qu'une alternance de la tension V_{R} fournie par le réseau, réduisant encore le courant consommé par l'indicateur L2 lumineux.

Dans cette première réalisation à écrêtage de la tension fournie par le réseau, comme représenté sur la figure 3A, le dispositif écrêteur du dispositif 1 de contrôle est par exemple constitué de deux diodes Transil DT1, DT2 connectés en série avec l'ampoule L1 et l'indicateur L2 lumineux. L'indicateur L2 lumineux ne voit ainsi que le courant correspondant à une tension fournie par le réseau supérieure à la tension V_{E} aux bornes de l'écrêteur formé par les deux diodes Transil.

Dans cette première réalisation à écrêtage de la tension V_{R} fournie par le réseau, le dispositif écrêteur du dispositif 1 de contrôle est par exemple à tension variable. Il comporte ainsi une diode Transil DT3 et un dispositif connecté en série avec la diode Transil DT3 et permettant de compenser les variations de la tension V_{R} fournie par le réseau. Ce dispositif comporte un transistor T1 de type MOS, une résistance R1, une diode Zener DZ1 programmable, par exemple du type TL431, et une résistance R_{G} de grille. Le drain D du transistor MOS est connecté à la diode Transil DT3 et sa grille G est connectée à la diode Transil DT3 via la résistance de grille R_{G}. La diode Zener DZ1 programmable a sa cathode connectée à la grille G du transistor T1 MOS, son anode connectée à la première borne de l'indicateur L2 lumineux et sa référence connectée à la source S du transistor T1 MOS. La résistance R1 est connectée d'une part à la première borne de l'indicateur L2 lumineux et d'autre part à la source S du transistor T1 MOS. La résistance de grille R_{G} est connectée entre le drain D et la grille G du transistor MOS. Dans cette solution, lorsque la tension V_{R} fournie par le réseau varie, la seule tension pouvant varier est la tension V_{E} entre le drain D et la source D du transistor MOS. Le transistor T1 MOS compense ainsi les variations de la tension V_{R} fournie par le réseau.

La figure 3C illustre le fonctionnement des solutions représentées sur les figures 3A et 3B. On peut voir sur la figure 3C que le dispositif 1 de contrôle permet d'écrêter la tension V_{R} fournie par le réseau. La tension vue par l'indicateur L2 lumineux est donc faible et il n'est alimenté que sur des périodes courtes pendant laquelle la tension fournie par le réseau est inférieure à la valeur seuil déterminée.

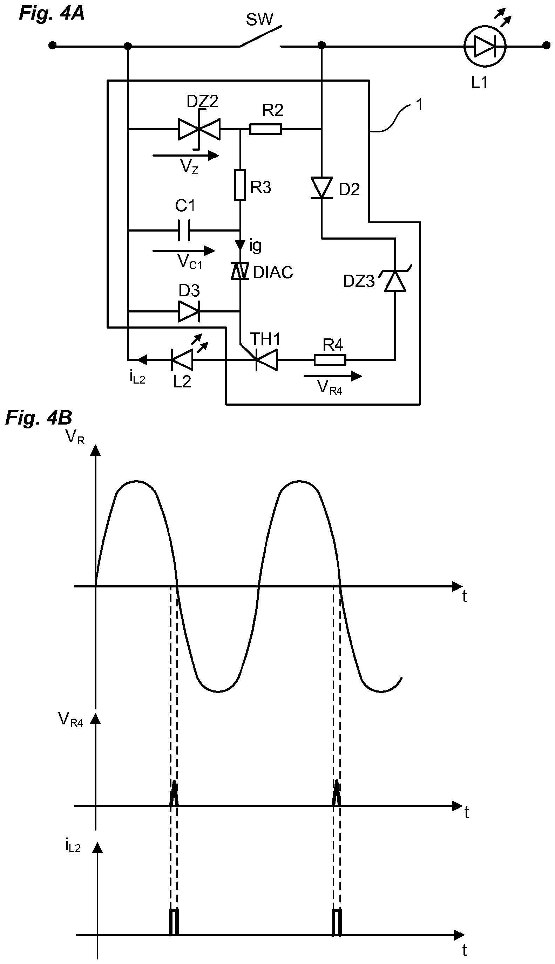

Pour limiter la tension aux bornes de l'ampoule L1 à des valeurs situées au-dessous de la valeur seuil déterminée, il est également possible de n'alimenter l'indicateur L2 lumineux que pendant les phases où la tension fournie par le réseau est autour de zéro. Comme représenté sur la figure 2B, le dispositif 1 de contrôle est alors connecté en parallèle de l'interrupteur SW et est agencé pour alimenter l'indicateur L2 lumineux. En référence à la figure 4A, le dispositif 1 de contrôle comporte ainsi une solution de type gradateur connectée en parallèle de l'indicateur L2 lumineux. L'indicateur L2 lumineux n'est alors alimenté que pendant une durée faible, avant ou après le passage par zéro de la tension V_{R} fournie par le réseau. Cette solution de type gradateur comporte notamment un thyristor TH1 qui est agencé pour conduire le courant à la fin de l'alternance positive de la tension V_{R} fournie par le réseau et qui bloque le courant lorsque la tension V_{R} fournie par le réseau passe par zéro. Sur cette figure 4A, les deux diodes Zener DZ2 montées en série tête-bêche et la résistance R2 forment un dispositif écrêteur permettant de fournir une tension alternative V_{Z} stable quelle que soit la tension V_{R} fournie par le réseau. La tension V_{Z} ainsi formée est appliquée à un filtre passe-bas constitué de la résistance R3 et du condensateur C1. Un composant DIAC est connecté à la gâchette du thyristor TH1.

Dès que la tension VC1 aux bornes du condensateur C1 devient supérieure à une valeur seuil déterminée, le composant DIAC s'amorce et permet au condensateur C1 de se décharger dans la gâchette du thyristor TH1. Ce courant de gâchette ig amorce le thyristor TH1 et permet à l'indicateur L2 lumineux d'être alimenté.

A l'amorçage du composant DIAC, le condensateur C1 se décharge et la tension V_{C1} aux bornes du condensateur C1 chute brusquement. Lorsque la tension V_{C1} repasse sous la valeur seuil précisée ci-dessus et devient inférieure au seuil d'amorçage du composant DIAC. L'indicateur L2 lumineux n'est alors plus alimenté jusqu'à ce que le condensateur C1 soit de nouveau chargé suffisamment pour réamorcer le composant DIAC. Le thyristor TH1 n'étant pas bidirectionnel, la diode D3 permet la décharge du condensateur C1 pendant l'alternance négative de la tension V_{R} fournie par le réseau.

Ainsi, avec ce schéma, l'indicateur L2 lumineux reçoit des impulsions à l'instant où la sinusoïde de la tension V_{R} fournie par le réseau est inférieure à la valeur seuil, par exemple égale à 20V.

Les courbes représentées sur la figure 4B illustrent ce fonctionnement.

Bien entendu, il est évident que toute autre solution qui permettrait de n'appliquer une tension faible, inférieure à la tension seuil prédéfinie pourrait être employée.

## Revendications

1. Système de commande d'une charge électrique destiné à recevoir une tension (V_{R}) fournie par un réseau électrique et comprenant :
- un interrupteur (SW) de commande, agencé pour prendre un état ouvert ou un état fermé,
- un indicateur (L2) de signalisation connecté en parallèle de l'interrupteur (SW) et agencé pour prendre deux états distincts liés chacun à l'état ouvert ou à l'état fermé de l'interrupteur (SW),
**caractérisé en ce qu'**il comporte :
- un dispositif (1) de contrôle connectée à l'indicateur (L2) de signalisation et agencé pour limiter une tension aux bornes de la charge électrique au-dessous d'une valeur seuil lorsque l'interrupteur (SW) est à l'état ouvert.

2. Système selon la revendication 1, **caractérisé en ce que** le dispositif (1) de contrôle est connecté en série avec l'indicateur (L2) de signalisation.

3. Système selon la revendication 2, **caractérisé en ce que** le dispositif (1) de contrôle comporte un dispositif d'écrêtage agencé pour absorber la différence entre la tension (V_{R}) fournie par le réseau électrique et la valeur seuil de tension.

4. Système selon la revendication 3, **caractérisé en ce que** le dispositif d'écrêtage comporte deux diodes Transil (DT1, DT2) connectées en série.

5. Système selon la revendication 3, **caractérisé en ce que** le dispositif d'écrêtage comporte un transistor (T1) agencé pour compenser les variations de la tension (V_{R}) fournie par le réseau.

6. Système selon la revendication 1, **caractérisé en ce que** le dispositif (1) de contrôle est connecté en parallèle de l'interrupteur (SW) et **en ce que** l'indicateur (L2) de signalisation est connecté audit dispositif (1) de contrôle.

7. Système selon la revendication 6, **caractérisé en ce que** le dispositif (1) de contrôle comporte un gradateur agencé pour permettre une alimentation de l'indicateur (L2) de signalisation avant ou après le passage par zéro de la tension (V_{R}) fournie par le réseau.

8. Système selon l'une quelconque des revendications 1 à 7, **caractérisé en ce que** l'indicateur (L2) de signalisation est de type lumineux.

9. Système selon l'une quelconque des revendications 1 à 7, **caractérisé en ce que** l'indicateur de signalisation est de type sonore.

10. Système selon l'une quelconque des revendications 1 à 7, **caractérisé en ce que** l'indicateur de signalisation comporte un détecteur d'état de l'interrupteur (SW) agencé pour détecter l'état ouvert ou l'état fermé de l'interrupteur (SW).

## Patentansprüche

1. System zur Steuerung einer elektrischen Ladung, das dazu bestimmt ist, eine Spannung (V_{R}) zu empfangen, die von einem Stromnetz geliefert wird, und umfassend:
- einen Steuerschalter (SW), der angeordnet ist, um einen offenen oder geschlossenen Zustand einzunehmen,
- eine Signalanzeige (L2), die parallel zum Schalter (SW) geschaltet und angeordnet ist, um zwei verschiedene Zustände einzunehmen, die jeweils mit dem offenen oder dem geschlossenen Zustand des Schalters (SW) in Verbindung stehen,
**dadurch gekennzeichnet, dass** es Folgendes umfasst:
- eine Steuervorrichtung (1), die mit der Signalanzeige (L2) verbunden und angeordnet ist, um eine Spannung an den Klemmen der elektrischen Last unter einen Schwellenwert zu begrenzen, wenn sich der Schalter (SW) im offenen Zustand befindet.

2. System nach Anspruch 1, **dadurch gekennzeichnet, dass** die Steuervorrichtung (1) in Reihe mit der Signalanzeige (L2) geschaltet ist.

3. System nach Anspruch 2, **dadurch gekennzeichnet, dass** die Steuervorrichtung (1) eine Glättungsvorrichtung aufweist, die angeordnet ist, um die Differenz zwischen der vom Stromnetz gelieferten Spannung (V_{R}) und dem Spannungsschwellenwert zu dämpfen.

4. System nach Anspruch 3, **dadurch gekennzeichnet, dass** die Glättungsvorrichtung zwei in Reihe geschaltete Transil-Dioden (DT1, DT2) umfasst.

5. System nach Anspruch 3, **dadurch gekennzeichnet, dass** die Glättungsvorrichtung einen Transistor (T1) umfasst, der angeordnet ist, um die Schwankungen der vom Stromnetz gelieferten Spannung (V_{R}) auszugleichen.

6. System nach Anspruch 1, **dadurch gekennzeichnet, dass** die Steuervorrichtung (1) parallel zum Schalter (SW) geschaltet ist und dass die Signalanzeige (L2) mit der Steuervorrichtung (1) verbunden ist.

7. System nach Anspruch 6, **dadurch gekennzeichnet, dass** die Steuervorrichtung (1) einen Stromsteller umfasst, der angeordnet ist, um eine Stromversorgung der Signalanzeige (L2) vor oder nach dem Nulldurchgang der vom Stromnetz gelieferten Spannung (V_{R}) zu ermöglichen.

8. System nach einem der Ansprüche 1 bis 7, **dadurch gekennzeichnet, dass** die Signalanzeige (L2) vom leuchtenden Typ ist.

9. System nach einem der Ansprüche 1 bis 7, **dadurch gekennzeichnet, dass** die Signalanzeige vom akustischen Typ ist.

10. System nach einem der Ansprüche 1 bis 7, **dadurch gekennzeichnet, dass** die Signalanzeige einen Zustandsdetektor für den Schalter (SW) umfasst, der angeordnet ist, um den offenen oder dem geschlossenen Zustand des Schalters (SW) zu erfassen.

## Claims

1. Control system for an electrical load, which control system is intended to receive a voltage (V_{R}) supplied by a mains electricity supply and comprising:
- a control switch (SW), which is designed to take an open state or a closed state,
- a signalling indicator (L2) connected in parallel with the switch (SW) and designed to take two different states that are each linked to the open state or the closed state of the switch (SW),
**characterized in that** it has:
- a control device (1) connected to the signalling indicator (L2) and designed to limit a voltage on the terminals of the electrical load below a threshold value when the switch (SW) is in the open state.

2. System according to Claim 1, **characterized in that** the control device (1) is connected in series with the signalling indicator (L2).

3. System according to Claim 2, **characterized in that** the control device (1) has a clipping device designed to absorb the difference between the voltage (V_{R}) supplied by the mains electricity supply and the voltage threshold value.

4. System according to Claim 3, **characterized in that** the clipping device has two Transil diodes (DT1, DT2) connected in series.

5. System according to Claim 3, **characterized in that** the clipping device has a transistor (T1) designed to compensate for the variations in the voltage (V_{R}) supplied by the mains supply.

6. System according to Claim 1, **characterized in that** the control device (1) is connected in parallel with the switch (SW) and **in that** the signalling indicator (L2) is connected to said control device (1).

7. System according to Claim 6, **characterized in that** the control device (1) has a dimmer designed to allow a supply of power to the signalling indicator (L2) before or after the zero crossing of the voltage (V_{R}) supplied by the mains supply.

8. System according to any one of Claims 1 to 7, **characterized in that** the signalling indicator (L2) is of luminous type.

9. System according to any one of Claims 1 to 7, **characterized in that** the signalling indicator is of sonorous type.

10. System according to any one of Claims 1 to 7, **characterized in that** the signalling indicator has a state detector for the switch (SW) that is designed to detect the open state or the closed state of the switch (SW).
